# EUROPÄISCHE PATENTSCHRIFT

(11) **EP 1 789 280 B1**
(45) Veröffentlichungstag und Bekanntmachung des Hinweises auf die Patenterteilung: **02.12.2009**
(21) Anmeldenummer: 05771982.5
(22) Anmeldetag: 12.08.2005
(51) Int. Cl.: B60N 2/02, B62D 5/04, F16H 1/16

(54) **GETRIEBE-ANTRIEBSEINHEIT**
GEAR/DRIVE UNIT
UNITE DE TRANSMISSION A ENGRENAGES

(30) Priorität: 31.08.2004 DE 102004042457
(43) Veröffentlichungstag der Anmeldung: 30.05.2007
(73) Patentinhaber: Robert Bosch GmbH, 70442 Stuttgart (DE)
(72) Erfinder: OBERLE, Hans-Juergen, 76437 Rastatt (DE); SCHMIDT, Willi, 76297 Stutensee-Buechig (DE); LIENIG, Andreas, 77815 Buehl (DE)
(86) Internationale Anmeldenummer: PCT/EP2005/053979
(87) Internationale Veröffentlichungsnummer: WO 2006/024598

(56) Entgegenhaltungen:
- EP-A- 0 759 374
- EP-A- 1 223 073
- DE-A1- 4 331 822
- US-A- 5 259 257

## Beschreibung

### Stand der Technik

Die Erfindung betrifft eine Getriebe-Antriebseinheit, insbesondere für eine Sitzverstellung oder Servolenkung im Kraftfahrzeug, nach der Gattung des Hauptanspruchs.

Aus der EP 0 759 374 oder DE 43 31822 ist eine Vorrichtung zum Verstellen eines Sitzes im Kraftfahrzeug bekannt, die an einem Basisteil befestigt ist, mit einer Spindel, auf der ein die Spindel antreibendes Antriebsrad vorgesehen ist, mit einem das Antriebsrad mittels eines Abtriebselements antreibendes Antriebsaggregat und mit zumindest einer Vorrichtung, an dem das Antriebsaggregat wenigstens angeflanscht ist und die zumindest das Abtriebselement und das Antriebsrad betriebsmäßig koppelt.

Mit der EP 1223073 A2 ist eine Getriebe-Antriebseinheit bekannt geworden, bei der eine Spindel mit einem Abtriebsrad in einem Getriebegehäuse gelagert ist. Das Getriebegehäuse ist zumindest teilweise von einem manschettenförmigen Abstützelement umschlossen, gegen das sich das Abtriebsrad bei axialer Krafteinwirkung von außen abstützen kann.

Bei einem Sitzverstellmotor mit Spindelantrieb wird in ein Getriebegehäuse, das im Allgemeinen bereits mit einem Motor verbunden ist, eine Spindel eingelegt. Die eingelegte Spindel ist oft als Verbundteil ausgeführt und besteht im einfachsten Fall aus der Spindel, einem aufgespritztem Schneckenrad und einem axialen Punktanlauf, die beispielsweise als Kugel ausgeführt ist. Weitere Anbauteile auf der Spindel, wie eine Spindelmutter, Anschlaghülsen etc. sind denkbar. Die Spindel soll möglichst spielfrei im Getriebegehäuse montiert sein, so dass die Betriebskräfte an der Spindel idealerweise keinen axialen Hub der Spindel im Getriebegehäuse bewirken. Die Spielfreiheit wird in der Regel durch Vermessen des Getriebegehäuses und Einlegen einer passenden Anlaufscheibe erreicht. Die Spielfreiheit kann z.B. durch zusätzliches Einlegen eines Federelements unrerstützt werden. Zur Optimierung der Reibverhältnisse am Schneckenrad, kann auf der dem Punktanlauf gegenüberliegenden Seite noch eine Axiallagerscheibe montiert werden.

Neben den auftretenden Betriebskräften müssen Spindelmotoren auch auftretende Crashkräfte (Zug- und Druckkräfte) abstützen, je nach Anwendungsfall ist das Getriebegehäuse also in Kunststoff oder Metall ausgeführt. Die zukünftigen Anforderungen werden tendenziell eher zu höheren Crashanforderungen gehen. Die dafür erforderlichen Metallgehäuse erfordern im Allgemeinen teuere Nacharbeitsschritte zur Einhaltung von Toleranzen. Hierbei wirkt sich eine seitliche, senkrecht zur Spindelachse gestaltete Öffnung, zum Einlegen der Spindel, grundsätzlich negativ auf die Festigkeit des Getriebegehäuses aus, d.h. das Getriebegehäuse neigt unter Zugbelastungen zum Aufbiegen. Nach der Montage der Spindel im Getriebegehäuse, wird das Gehäuse mittels eines Getriebedeckels, z.B. durch Verschrauben, verschlossen. Die Position einer kundenseitigen Anschlussbohrung kann je nach Kundenwunsch in unterschiedlichen Positionen um die Spindelachse positioniert sein. Dies erfordert somit oft je Anwendung ein neues Getriebegehäuse.

Aufgabe der vorliegenden Erfindung ist es daher, ein einfacheres Konzepts für Spindelmotoren zu schaffen, das den oben beschriebenen Anforderungen gerecht wird. Gelöst wird diese Aufgabe mit den Merkmalen des Anspruchs 1.

### Vorteile der Erfindung

Die erfindungsgemäße Getriebe-Antriebseinheit mit den Merkmalen des Anspruchs 1 hat den Vorteil, dass die erforderlichen Bauteile reduziert und vereinfacht werden, wodurch geringere Kosten entstehen. Außerdem wird die Montage vereinfacht; es ist kein Einmessen von Teilen notwendig. Ferner entsteht eine größere Flexibilität in der Position der kundenseitigen Anschraubbohrung. Schließlich werden verschärftere Crashanforderungen erfüllt.

Hierzu ist eine Getriebe-Antriebseinheit vorgesehen, insbesondere für eine Sitzverstellung oder eine Servolenkung, die an einem Basisteil befestigt ist, mit einer Spindel, auf der ein die Spindel antreibendes Antriebsrad vorgesehen ist, mit einem das Antriebsrad mittels eines Abtriebselements antreibendes Antriebsaggregat und mit zumindest einer Vorrichtung, an dem das Antriebsaggregat wenigstens angeflanscht ist und die zumindest das Abtriebselement und das Antriebsrad betriebsmäßig koppelt, wobei zumindest ein zusätzlicher Träger vorgesehen ist, in dem das Antriebsrad gelagert ist, der an dem Basisteil befestigt ist und der die Vorrichtung trägt.

Wenn der Träger zumindest die Form eines Rohrs hat, und wenigstens ein erster Lagerdeckel vorgesehen ist, der in dem Träger befestigt ist und das Antriebsrad auf einer Seite axial und radial lagert, so ergibt sich ein kompakter, einfacher Aufbau, der hohe Crashkräfte aufnehmen kann.

Die Lagerung wird dann dadurch komplettiert, dass ein zweiter Lagerdeckel vorgesehen ist, der in dem Träger befestigt ist und das Antriebsrad auf der anderen Seite axial und radial lagert, oder dass der Träger die Form eines Topfes hat und das Antriebsrad auf der anderen Seite axial und radial lagert.

Vorzugsweise hat der Träger zumindest eine radiale Aussparung, durch die das Abtriebselement des Antriebsaggregats und das Antriebsrad miteinander verbunden sind. Dadurch ergibt sich ein soweit wie möglich geschlossener Aufbau der Trägers, wodurch hohe Crashkräfte aufgenommen werden können.

Ein besonders einfaches Verfahren zur Montage ergibt sich dadurch, dass die Spindel, das Antriebsrad und der Träger eine erste Hauptbaugruppe bilden, dass das Abtriebselement, das Antriebsaggregat und die Vorrichtung eine zweite Hauptbaugruppe bilden und dass die erste und die zweite Hauptbaugruppe zunächst jeweils separat montiert und dann zusammengebaut werden. Hier wird das Axialspiel des Antriebsrads bei der Montage durch zusammenschieben des Antriebsrads und des Trägers und wenigstens eines Lagerdeckels minimiert.

Weitere Vorteile und vorteilhafte Weiterbildungen ergeben sich aus den Unteransprüchen und der Beschreibung.

### Zeichnung

Ein Ausführungsbeispiel ist in der Zeichnung dargestellt und in der nachfolgenden Beschreibung näher erläutert. Es zeigen:
- Figur 1: einen Ausschnitt aus einer Getriebe-Antriebseinheit nach den Schnittlinien I-I in der Figur 2,
- Figur 2: eine Seitenansicht nach der Figur 1,
- Figur 3: einen Ausschnitt aus der Getriebe-Antriebseinheit nach den Schnittlinien III-III aus der Figur 2,
- Figur 4: einen Draufsicht auf Figur 3 und
- Figur 5: den Ausschnitt aus Figur 3 in einer Abwandlung.

### Beschreibung der Ausführungsbeispiele

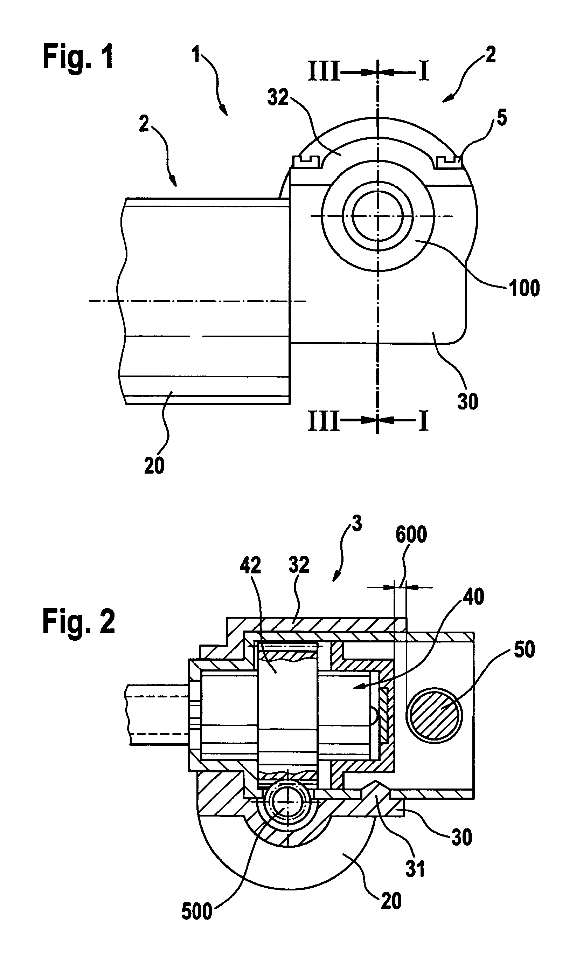

Der in den Figuren 1 und 2 gezeigte Spindelantrieb 1 besteht aus zwei Hauptbaugruppen 2, 3 mit unterschiedlichen Funktionen. Die erste Hauptbaugruppe 2 umfasst ein Antriebsaggregat 20, beispielsweise einen Elektromotor, mit einer Schnecke 500, ein Getriebegehäuse 30 und den Getriebedeckel 32. Diese Baugruppe 2 dient der Aufnahme und dem Antreiben der zweiten Hauptbaugruppe 3.

Die zweite Hauptbaugruppe 3 stellt ein Spindelmodul dar. Es bildet eine Schnittstelle, lagert das Schneckenrad, stützt die Betriebskräfte und Crashkräfte ab. Die passiven Funktionen, d.h. das Abstützen von Crashkräften, werden ohne das Zutun der ersten Hauptbaugruppe 2 erfüllt. Die zweite Hauptbaugruppe 3 umfasst einen rohrförmigen Träger 100, wobei das Profil des Rohrs unterschiedlich, beispielsweise rund, abgeflacht, rechteckig etc., ausgebildet sein kann. Der Träger 100 kann mit verschiedenen Fertigungsverfahren, beispielsweise gerollt, gezogen, gegossen etc., hergestellt sein.

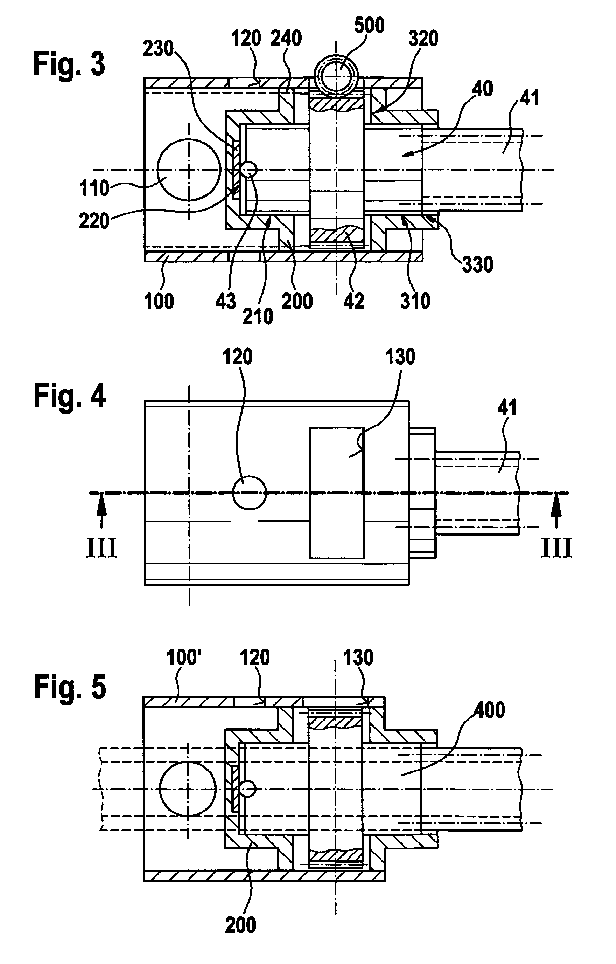

Gemäß den Figuren 3 bis 5 sind im Träger 100 Bereiche 110, 120, 130 mit verschiedenen Funktionen, hier als Aussparungen dargestellt, vorgesehen. Das Anbringen dieser Bereiche erfolgt idealerweise im Fertigungsprozess des Trägers 100. Die Funktionen stellen sich wie folgt da:
Der als Aussparung ausgebildete Bereich 110 bildet die kundenseitige Schnittstelle (rund dargestellt), die in einer beliebigen Kontur und Position am Umfang ausgeführt sein kann. Die Flexibilität bezüglich der Kundenschnittstelle wird so erhöht, ohne Änderungen an einem aufwändig aufgebauten Getriebegehäuse vornehmen zu müssen.

Der als Aussparung ausgebildete Bereich 120 dient der Positionierung des Spindelmoduls bei der späteren Montage im Getriebegehäuse, wie bei Aussparung 110 können auch hier Kontur und Position frei gewählt werden.

Grundsätzlich müssen die Bereiche 110 und 120 aber keine Aussparungen darstellen, sondern können beispielsweise auch als Vorsprünge, Laschen etc. ausgebildet sein.

Der Bereich 130 ist als Öffnung ausgeführt. Seine Kontur ist so zu wählen, dass der Eingriff der Schnecke 500, die nicht Teil des Spindelmoduls, d.h. der zweiten Baugruppe 3 ist, in das Schneckenrad 42 der Spindelbaugruppe 40 gewährleistet ist. Über diese Öffnung wird die Schnittstelle der beiden Hauptbaugruppen 2 und 3 gebildet.

Figur 3 zeigt die weiteren Bauteile der zweiten Hauptbaugruppe 3. Im rohrförmigem Träger 100 befindet sich ein Lagerdeckel 200, der das Verbundteil Spindelbaugruppe 40, bestehend aus der eigentlichen Spindel 41, dem Schneckenrad 42 und einer einen Punktanlauf bildenden Kugel 43, radial an der Stelle 210 und axial an der Stelle 220 lagert. Die Radiallagerung 210 der Spindelbaugruppe 40 erfolgt mittels eines zylindrisch ausgeführten Bereichs im Lagerdeckel 200. Die Axiallagerung 220 wird über einen Punktanlauf realisiert, wobei abhängig vom Werkstoff und den Betriebskräften die Axiallagerung 220 direkt im Lagerdeckel 200 oder wahlweise über ein zusätzliches Anlaufplättchen 230 erfolgen kann. Die punktförmige Axiallagerung der Spindelbaugruppe 40 muss nicht mittels einer Kugel 430 erfolgen. Es kann beispielsweise auch eine Kuppe direkt an der eigentlichen Spindel 41 angebracht werden. Der Lagerdeckel kann als Metall-, Kunststoff- oder Verbundteil ausgeführt sein.

Ein Lagerdeckel 300 übernimmt die radiale Lagerung an der Stelle 310 und die axiale Lagerung an einer Stelle 320 und/oder 330 der Spindel auf der dem Lagerdeckel 200 gegenüberliegenden Seite. Die Radiallagerung 310 im Lagerdeckel 300 entspricht der im Lagerdeckel 200. Die Axiallagerung 220 und/oder 230 ist jedoch nicht als Punktanlauf ausgeführt, sondern bildet einen flächigen Anlauf. Je nach Anwendungsfall können wahlweise die Anlaufflächen 320 oder 330 zur Lagerung genutzt werden. Idealerweise geschieht die Axiallagerung über die Anlauffläche 330, da hier der Reibradius kleiner ist, und somit die Reibungsverluste verringert sind. Durch eine geeignete Werkstoffauswahl und Oberflächenbeschaffenheit kann ggf. auf eine Anlaufscheibe verzichtet werden. Idealerweise ist vor der Montage der Spindelbaugruppe 40 bereits einer der Lagerdeckel 200 oder 300 im Träger 100 z.B. durch Einrollen oder einen anderen Verbindungsprozess vormontiert, wobei die Verbindung so auszuwählen ist, dass sie mindestens die auftretenden Betriebskräfte abstützen kann. Den Lagerdeckel 300 betreffend muss die Verbindung so gewählt sein, dass neben den Betriebskräften auch die auftretenden Crashkräfte abgestützt werden können. Am Lagerdeckel 200 müssen zumindest die Betriebskräfte abgestützt werden, da sich die Spindelbaugruppe 40 bei losem Lagerdeckel 300 im Crash, an dem durch die kundenseitige Bohrung 110 ragenden Befestigungsbolzen 50 abstützen kann, d.h. die Spindelbaugruppe 40 und der Lagerdeckel 200 stehen am Befestigungsbolzen 50 an.

Die konstruktive Auslegung eines Spalts 600 zwischen der Spindelbaugruppe 40 und dem Befestigungsbolzen 50 bestimmt den maximalen Hub der Spindelbaugruppe 40 im Crash und sollte in der Regel so gering wie möglich sein.

Nach dem Einsetzen der Spindelbaugruppe 40, wird der zweite Lagerdeckel 300 vorzugsweise so montiert, dass er mit einer definierten Kraft gegen die Spindelbaugruppe 40 gedrückt wird. Dann wird die Verbindung zwischen dem Lagerdeckel 300 und dem Träger 100 hergestellt. Die Verbindungstechnik ist vorzugsweise so gewählt, dass neben der definierten axialen Vorspannung keine weiteren Axialkräfte auf die Spindelbaugruppe 40 wirken und die Betriebs- bzw. Crashkräfte aufgenommen werden können. Somit ist ein definierter spielfreier Zustand ohne zusätzliche Teile oder Messungen hergestellt.

Figur 5 zeigt gegenüber Figur 3 eine Weiterbildung der zweiten Hauptbaugruppe 3. Statt eines reinen Rohrprofils kommt hier ein abgesetzter rohrförmiger oder topfförmiger Träger 100', beispielsweise durch Tiefziehen hergestellt, zum Einsatz. D.h. der Lagerdeckel 300 nach Figur 3 ist am Träger 100' direkt mit ausgeformt. Vorteilhaft gegenüber der Ausführung nach Figur 3 ist hierbei, dass ein Bauteil eingespart wird und keine Verbindung, die neben den Betriebskräften auch Crashkräfte abstützt, zwischen den Teilen hergestellt werden muss. Gerade bezüglich der Crashanforderungen können bei einem Design entsprechend Figur 5 durch Einsatz von Werkstoffen mit unterschiedlichen Festigkeitseigenschaften (z.B. Zugfestigkeit) , bzw. einfache Geometrieänderungen (z.B. Wandstärken), große Veränderungen bezüglich der Crashfestigkeit erzielt werden. Die weiteren Funktionen stellen sich wie bereits beschrieben dar. Zur Montage der zweiten Hauptbaugruppe 3 wird die Spindelbaugruppe 40 in den Träger 100` eingeschoben und dann der Lagerdeckel 200 unter definierter Vorspannung, wie bereits beschrieben, im Träger 100' fixiert.

Zur Komplettmontage wird entsprechend Figur 1 das Spindelmodul, d.h. die zweite Hauptbaugruppe 3 in das Getriebegehäuse 30 das mit dem Motor 20 verbunden ist eingelegt. Die Positionierung der zweiten Hauptbaugruppe 3 zur ersten Hauptbaugruppe 2 bzw. Motorteil 20 mit der Schnecke 500 kann beispielhaft mittels eines Zapfens 31 im Getriebegehäuse und einer Bohrung 12 im Träger erfolgen. Die Schnecke 500 greift somit in das Antriebsrad bzw. Schneckenrad 42 des Spindelmoduls ein. Die Positionierung muss nicht zwangsläufig mittels einer Bohrung realisiert werden, sondern kann auch durch andere Maßnahmen, wie z.B. Anprägungen etc. sichergestellt werden. Die endgültige Fixierung der zweiten Hauptbaugruppe 3 (des Spindelmoduls) erfolgt durch die Montage und Fixierung des Getriebedeckels 32. Auch hier ist nur beispielhaft die Fixierung des Getriebedeckels 32 mittels Verschraubung 5 dargestellt, alternative Befestigungsmöglichkeiten wie Klipsen, Prägen, Schweißen etc. sind auch denkbar.

Das Getriebegehäuse 30 muss nicht wie gezeigt als den Träger 100 umschließendes Gehäuse ausgebildet sein. Es genügt, wenn es zumindest die Funktion eines Lagerbocks oder Flansches erfüllt, der die Schnecke 500 und das Schneckenrad 42 miteinander koppelt. Hierzu müssen lediglich der Elektromotor 20 und der Träger 100 an dem Lagerbock oder Flansch oder einer sonstigen Vorrichtung angeflanscht werden können.

Im gezeigten Ausführungsbeispiel ist der Lagerdeckel 200 eingesetzt und eingerollt, verstemmt, verschweißt oder auf eine sonstige Art befestigt. Es ist aber auch möglich, dass der Lagerdeckel 200 an seinem Außenumfang 240 ein Außengewinde aufweist, das in ein korrespondierendes Innengewinde des Trägers 200 geschraubt ist. Dies ist mit gestrichelten Linien angedeutet. Dadurch lässt sich das Axialspiel der Spindelbaugruppe 40 spielfrei einstellen. Außerdem wird dadurch die axial wirkende Kraft aufgenommen. Es muss lediglich eine Verdrehsicherung für das Gewinde am Außenumfang 240 vorgesehen werden. Dies kann beispielsweise durch eine Verstemmung oder eine sonstige Methode erfolgen. Dadurch wird die Lagerung verbessert und es werden die Toleranzen reduziert. Außerdem können die Kunststofflagerstellen im Schneckenrad entfallen, und die Spindelbaugruppe 40 kann direkt im Kunststoff gelagert werden. Ferner wird die Festigkeit der Rohrabdeckung erhöht, da die Kraftaufnahme über ein Gewinde und nicht mehr über die Verstemmung erfolgt. Schließlich wird die Montage vereinfacht. Die eingeleiteten Betriebs- und Crashkräfte werden in axialer Richtung vom Gewinde aufgenommen, welches entsprechend ausgelegt wird. Somit ist die Festigkeit nicht mehr vom Prozess abhängig. Die mögliche Verstemmung dient letztlich nur noch zur Verdrehsicherung der Bauteile. Somit ist gewährleistet, dass auch im Crashfall der Motor 20 nicht bricht; man somit also keine Unterstützung der Kundenschnittstelle, d.h. des Befestigungsbolzens 50 mehr benötigt.

Dieses Konzept kann angewendet werden auf Spindelmotoren mit Drehspindel (axial feststehende und drehende Spindel, auf der verdrehfest die Getriebeverzahnung angebracht ist) oder auf Tauchspindelmotoren (axial bewegliche Spindel, welche durch ein Schneckenrad mit Innengewinde angetrieben wird und durch dieses beidseitig durchtaucht). Der als Kunststoffteil ausgeführte Lagerdeckel 200 kann sowohl mit Sacklochbohrung (bei Drehspindelkonzept) als auch mit Durchgangsbohrung (bei Tauchspindelkonzept) ausgeführt sein. Die Seitenwände der Bohrung dienen in beiden Fällen der Radiallagerung der Gewindespindel oder des Schneckenrades, je nach Motorausführung. Bei einer Sacklochbohrung kann dann ein gehärtetes Anlaufplättchen 230 eingebracht werden, über welche die Axiallagerung ausgeführt werden kann. Bei der Ausführung mit Durchgangsbohrung wird ein Bund als Axiallagerung genutzt.

Der Lagerdeckel 200 kann neben der gezeigten Topfform mit den abstehenden Flanschen auch einen konstanten Außendurchmesser haben.

Wie mit gestrichelten Linien in Figur 5 dargestellt kann der oben beschriebene modulare Aufbau auch bei Motorkonzepten mit durchtauchenden Spindeln zur Anwendung kommen. Die Axiallagerung ist hierbei beidseitig als Fläche ausgeführt.

Statt des dargestellten Schneckengetriebes kann auch ein Getriebe mit einer Stirnverzahnung zum Einsatz kommen.

## Patentansprüche

1. Getriebe-Antriebseinheit (1), insbesondere für eine Sitzverstellung oder eine Servolenkung, die an einem Basisteil (50) befestigt ist, mit einer Spindel (40), auf der ein die Spindel (40) antreibendes Antriebsrad (42) vorgesehen ist, mit einem das Antriebsrad (42) mittels eines Abtriebselements (500) antreibenden Antriebsaggregat (20) und mit zumindest einer Vorrichtung (30), an der das Antriebsaggregat (20) wenigstens angeflanscht ist und die zumindest das Abtriebselement (500) und das Antriebsrad (42) betriebsmäßig koppelt, **wobei** zumindest ein zusätzlicher Träger (100,100') vorgesehen ist, in dem das Antriebsrad (42) gelagert ist, und der Träger (100, 100') an dem Basisteil (50) befestigt ist und die Vorrichtung (30) trägt, **dadurch gekennzeichnet, dass** der Träger (100,100') zumindest eine - bezüglich des Abtriebsrads (42) - radiale Aussparung (130) hat, durch die das Abtriebselement (500) des Antriebsaggregats (20) und das Antriebsrad (42) miteinander verbunden sind.

2. Getriebe-Antriebseinheit (1) nach Anspruch 1, **dadurch gekennzeichnet, dass** der Träger (100, 100') zumindest die Form eines runden Rohrs hat, und wenigstens ein erster Lagerdeckel (200) vorgesehen ist, der in dem Träger (100, 100') befestigt ist und das Antriebsrad (42) auf einer Seite axial und radial lagert.

3. Getriebe-Antriebseinheit (1) nach Anspruch 2, **dadurch gekennzeichnet, dass** der wenigstens erste Lagerdeckel (200) am Außenumfang ein Außengewinde aufweist, mit dem er in ein korrespondierendes Innengewinde des Trägers (100,100') geschraubt ist.

4. Getriebe-Antriebseinheit (1) nach Anspruch 2 oder 3, **dadurch gekennzeichnet, dass** ein zweiter Lagerdeckel (300) vorgesehen ist, der in dem Träger (100) befestigt ist und das Antriebsrad (42) auf der anderen Seite axial und radial lagert.

5. Getriebe-Antriebseinheit (1) nach Anspruch 2 oder 3, **dadurch gekennzeichnet, dass** der Träger (100') die Form eines Topfes hat und das Antriebsrad (42) auf der anderen Seite axial und radial lagert.

6. Getriebe-Antriebseinheit (1) nach einem der vorergehenden Ansprüche, **dadurch gekennzeichnet, dass** die Vorrichtung (30) ein Getriebegehäuse oder Flansch oder Lagerbock ist.

7. Getriebe-Antriebseinheit (1) nach Anspruch 6, **dadurch gekennzeichnet, dass** das Getriebegehäuse (30) als denTräger (100,100') umschließendes Gehäuse ausgebildet ist.

8. Verfahren zur Montage der Getriebe-Antriebseinheit (1) nach einem der vorergehenden Ansprüche, **dadurch gekennzeichnet, dass** die Spindel (40), das Antriebsrad (42) und der Träger (100,100') eine erste Hauptbaugruppe (2) bilden, dass das Abtriebselement (500), das Antriebsaggregat (10) und die Vorrichtung (30) eine zweite Hauptbaugruppe (3) bilden und dass die erste und die zweite Hauptbaugruppe (2, 3) zunächst jeweils separat montiert und dann zusammengebaut werden.

9. Verfahren nach Anspruch 8, **dadurch gekennzeichnet, dass** das Axialspiel des Antriebsrads (42) bei der Montage durch Zusammenschieben des Antriebsrads (42) und des Trägers (100, 100') und Zusammenschieben oder Verschrauben wenigstens eines Lagerdeckels (200) minimiert wird.

## Claims

1. Gear/drive unit (1), in particular for a seat adjustment or a power-assisted steering system, said gear/drive unit being fastened to a base part (50), with a spindle (40) on which a drive wheel (42) which drives the spindle (40) is provided, with a drive assembly (20) which drives the drive wheel (42) by means of a driven element (500), and with at least one device (30) on which the drive assembly (20) is at least flange-mounted and which couples at least the driven element (500) and the drive wheel (42) in terms of operation, wherein at least one additional support (100, 100') is provided in which the drive wheel (42) is mounted, and the support (100, 100') is fastened to the base part (50) and supports the device (30), **characterized in that** the support (100, 100') has at least one cutout (130) which is radial - with respect to the drive wheel (42') - and by means of which the driven element (500) of the drive assembly (20) and the drive wheel (42) are connected to each other.

2. Gear/drive unit (1) according to Claim 1, **characterized in that** the support (100, 100') is at least in the shape of a round tube, and at.least one bearing cover (200) is provided and is fastened in the support (100, 100') and positions the drive wheel (42) axially and radially on one side.

3. Gear/drive unit (1) according to Claim 2, **characterized in that** the outer circumference of the at least one first bearing cover (200) has an external thread with which it is screwed into a corresponding internal thread of the support (100, 100').

4. Gear/drive unit (1) according to Claim 2 or 3, **characterized in that** a second bearing cover (300) is provided and is fastened in the support (100) and positions the drive wheel (42) axially and radially on the other side.

5. Gear/drive unit (1) according to Claim 2 or 3, **characterized in that** the support (100') is in the shape of a cup and positions the drive wheel (42) axially and radially on the other side.

6. Gear/drive unit (1) according to one of the preceding claims, **characterized in that** the device (30) is a gear housing or flange or bearing bracket.

7. Gear/drive unit (1) according to Claim 6, **characterized in that** the gear housing (30) is designed as a housing which surrounds the support (100, 100').

8. Method for installing the gear/drive unit (1) according to one of the preceding claims, **characterized in that** the spindle (40), the drive wheel (42) and the support (100, 100') form a first main subassembly (2), **in that** the driven element (500), the drive assembly (20) and the device (30) form a second main subassembly (3), and **in that** the first and the second main subassemblies (2, 3) are each first of all fitted separately and are then fitted together.

9. Method according to Claim 8, **characterized in that** the axial play of the drive wheel (42) is minimized during the installation by pushing together the drive wheel (42) and the support (100, 100') and pushing together or screwing together at least one bearing cover (200).

## Revendications

1. Unité d'entraînement à engrenage (1), en particulier pour régler un siège ou pour une direction assistée, qui est fixée à une partie de base (50), avec une broche (40), sur laquelle est prévue une roue d'entraînement (42) entraînant la broche (40), avec un groupe d'entraînement (20) entraînant la roue d'entraînement (42) au moyen d'un élément de prise de force (500), et avec au moins un dispositif (30), auquel est au moins bridé le groupe d'entraînement (20) et qui accouple fonctionnellement au moins l'élément de prise de force (500) et la roue d'entraînement (42), au moins un support supplémentaire (100, 100') étant prévu, dans lequel la roue d'entraînement (42) est montée, et le support (100, 100') étant fixé à la partie de base (50) et portant le dispositif (30), **caractérisée en ce que** le support (100, 100') a au moins un évidement (130) radial par rapport à la roue d'entraînement (42), par le biais duquel l'élément de prise de force (500) du groupe d'entraînement (20) et la roue d'entraînement (42) sont connectés l'un à l'autre.

2. Unité d'entraînement à engrenage (1) selon la revendication 1, **caractérisée en ce que** le support (100, 100') a au moins la forme d'un tube rond, et au moins un premier couvercle de palier (200) est prévu, lequel est fixé dans le support (100, 100') et supporte la roue d'entraînement (42) sur un côté axialement et radialement.

3. Unité d'entraînement à engrenage (1) selon la revendication 2, **caractérisée en ce que** l'au moins un premier couvercle de palier (200) présente sur la circonférence extérieure un filetage extérieur avec lequel il est vissé dans un filetage intérieur correspondant du support (100, 100').

4. Unité d'entraînement à engrenage (1) selon la revendication 2 ou 3, **caractérisée en ce qu'**un deuxième couvercle de palier (300) est prévu, lequel est fixé dans le support (100) et supporte la roue d'entraînement (42) de l'autre côté axialement et radialement.

5. Unité d'entraînement à engrenage (1) selon la revendication 2 ou 3, **caractérisée en ce que** le support (100') a la forme d'un pot et supporte la roue d'entraînement (42) de l'autre côté axialement et radialement.

6. Unité d'entraînement à engrenage (1) selon l'une quelconque des revendications précédentes, **caractérisée en ce que** le dispositif (30) est un boîtier de transmission ou une bride ou un coussinet.

7. Unité d'entraînement à engrenage (1) selon la revendication 6, **caractérisée en ce que** le boîtier de transmission (30) est réalisé sous forme de boîtier entourant le support (100, 100').

8. Procédé de montage de l'unité d'entraînement à engrenage (1) selon l'une quelconque des revendications précédentes, **caractérisé en ce que** la broche (40), la roue d'entraînement (42) et le support (100, 100') forment un premier module principal (2), **en ce que** l'élément de prise de force (500), le groupe d'entraînement (20) et le dispositif (30) forment un deuxième module principal (3) et **en ce que** le premier et le deuxième module principal (2, 3) sont d'abord montés à chaque fois séparément puis assemblés l'un à l'autre.

9. Procédé selon la revendication 8, **caractérisé en ce que** le jeu axial de la roue d'entraînement (42) lors du montage est minimisé en réunissant la roue d'entraînement (42) et le support (100, 100') et en réunissant ou en vissant au moins un couvercle de palier (200).
